# EUROPÄISCHE PATENTSCHRIFT

(11) **EP 3 893 113 B1**
(45) Veröffentlichungstag und Bekanntmachung des Hinweises auf die Patenterteilung: **21.06.2023**
(21) Anmeldenummer: 20168511.2
(22) Anmeldetag: 07.04.2020
(51) Int. Cl.: G06F 11/07, G06F 11/36

(54) **ÜBERWACHUNG EINER KOMPONENTE EINES STEUERUNGSSYSTEMS FÜR EIN FORTBEWEGUNGSMITTEL**
MONITORING OF A COMPONENT OF A CONTROL SYSTEM FOR A MOVING MEANS
SURVEILLANCE D'UN COMPOSANT D'UN SYSTÈME DE COMMANDE POUR UN MOYEN DE DÉPLACEMENT

(43) Veröffentlichungstag der Anmeldung: 13.10.2021
(73) Patentinhaber: Elektrobit Automotive GmbH, 91058 Erlangen (DE)
(72) Erfinder: Hermann, Stefan, 65824 Schwalbach a. Ts. (DE)
(74) Vertreter: Continental Corporation

(56) Entgegenhaltungen:
- WO-A1-2015/028581
- DE-A1-102013 216 444
- DE-A1-102014 222 860

## Beschreibung

Die vorliegende Erfindung betrifft ein Verfahren, ein Computerprogramm mit Instruktionen und ein Modul zum Überwachen einer Komponente eines Steuerungssystems für ein Fortbewegungsmittel.

Bei der Entwicklung von Steuerungssystemen für Fortbewegungsmittel, insbesondere im Automobilbereich, ist ein wichtiger Aspekt die Behandlung von Fehlfunktionen oder Ausfällen dieser Systeme. Da solche Situationen kritische Auswirkungen haben können, ist der zuverlässige Umgang mit ihnen ein wesentliches Sicherheitsziel. Funktionen zur Ausfallerkennung eines digitalen Systems werden üblicherweise als Watchdog bezeichnet. Wird von einem Watchdog eine mögliche Fehlfunktion einer Komponente erkannt, so wird dies entweder an andere Komponenten signalisiert, indem beispielsweise auf ein redundantes System umgeschaltet wird, ein Reset zur Behebung des Ausfalls eingeleitet oder ein sicheres Abschalten veranlasst.

Bei einem klassischen einfachen Watchdog-Ansatz, bei dem z.B. in Reaktion auf eine externe Anfrage ein definiertes Bit gesetzt wird, werden lediglich die Eingabe-/Ausgabe-Funktionen einer Komponente überwacht. Auch aktuellere Watchdog-Ansätze, die auf Challenge-Response-Verfahren basieren, überwachen nur Funktionen einer arithmetisch-logischen Einheit (ALU: Arithmetic Logic Unit) und die Eingabe-/Ausgabe-Funktionen. Die Überwachung nur dieser Funktionen ist aber nicht ausreichend, wenn die funktionale Sicherheit von Applikationen ASIL B (ASIL: Automotive Safety Integrity Level) oder ASIL D oder die die funktionale Sicherheit eines Betriebssystems ASIL B genügen soll.

In diesem Zusammenhang beschreibt DE 10 2012 024 818 A1 ein Verfahren zur Verbesserung der funktionalen Sicherheit und Steigerung der Verfügbarkeit eines elektronischen Kraftfahrzeugregelungssystems mit Hard- und Softwarekomponenten, wobei die Hardwarekomponenten durch eine Basissoftwarekomponente oder eine Laufzeitumgebung abstrahiert werden. Ein implementiertes Sicherheitskonzept beschreibt zwei oder mehrere Software-Ebenen, wobei eine erste Software-Ebene Regelfunktionen einer Applikationssoftware umfasst und eine zweite Software-Ebene als Funktionsüberwachung zur Absicherung von Fehlern der Regelfunktionen ausgestaltet ist. Bei dem Verfahren wird eine von einer Hardwarekomponente bereitgestellte Datenverschlüsselung oder Datensignatur zur Datenabsicherung eines Kommunikationskanals der Hardwarekomponente mit einer ersten Softwarekomponente genutzt.

DE 10 2014 222 860 A1 beschreibt eine elektronische Fahrzeugregelungseinheit mit einem Mikrocomputer mit einer CPU und einem Überwachungsmodul, das eine Operation des Mikrocomputers überwacht. Die CPU des Mikrocomputers führt ein Programm aus, das ein Erst-Level-Programm, ein Zweit-Level-Programm und ein Dritt-Level-Programm umfasst. Das Erst-Level-Programm dient zum Regeln eines Regelungsobjekts. Das Zweit-Level-Programm dient zum Überwachen, ob eine durch das Erst-Level-Programm an dem Regelungsobjekt ausgeführte Regelungsfunktion fehlerfrei ist und zum Ausgeben eines ersten Unterbrechungssignals, das die Regelungsfunktion deaktiviert, wenn bestimmt wird, dass die Regelungsfunktion fehlerhaft ist. Das Dritt-Level-Programm beinhaltet ein Testprogramm, das einen Programmausführtest des Zweit-Level-Programms ausführt und ein Testergebnis an das Überwachungsmodul ausgibt. Das Überwachungsmodul gibt ein zweites Unterbrechungssignal aus, das die Regelungsfunktion deaktiviert, wenn das Testergebnis nicht mit einem Erwartungswert des Testergebnisses übereinstimmt.

DE 10 2013 216 444 A1 beschreibt ein Fahrzeugsystem mit einem Kraftmaschinensteuerungsmodul, einem ersten Prozessormodul, Sensoren, einem zweiten Prozessormodul und einem dritten Prozessormodul. Das erste Prozessormodul enthält einen ersten Mikroprozessor und betätigt selektiv einen elektrischen Servolenkungsmotor, Reibungsbremsen und/oder ein Drosselklappenventil auf der Grundlage von verarbeiteten Daten. Die Sensoren erfassen Merkmale außerhalb des Fahrzeugs. Das zweite Prozessormodul enthält einen zweiten Mikroprozessor und erzeugt die verarbeiteten Daten auf der Grundlage von Daten von den Sensoren. Der zweite Mikroprozessor ist ein Graphik-Mikroprozessor. Das dritte Prozessormodul enthält einen dritten Mikroprozessor und erzeugt eine Anzeige darüber, ob ein Fehler im zweiten Prozessormodul vorhanden ist.

WO 2015/028581 A1 beschreibt ein Verfahren zur Überwachung einer Komponente eines Kraftfahrzeugs mit einem ersten Steuergerät zum Überwachen der Komponente und einem zweiten Steuergerät zum Überwachen der Komponente. Das zweite Steuergerät ist beabstandet von dem ersten Steuergerät angeordnet und kommuniziert mit dem ersten Steuergerät, wobei das zweite Steuergerät über eine Leitung mit der Komponente verbunden ist. Bei dem Verfahren übermittelt das zweite Steuergerät Betriebsdaten an das erste Steuergerät, die in dem ersten Steuergerät überprüft werden. Von dem ersten Steuergerät werden Daten an das zweite Steuergerät übermittelt. Die Komponente wird durch das zweite Steuergerät abgeschaltet, wenn durch das erste Steuergerät oder das zweite Steuergerät ein Störfall festgestellt wird.

Es ist Aufgabe der vorliegenden Erfindung, Lösungen für eine verbesserte Überwachung einer Komponente eines Steuerungssystems für ein Fortbewegungsmittel bereitzustellen.

Diese Aufgabe wird durch ein Verfahren mit den Merkmalen des Anspruchs 1, durch ein Computerprogramm mit Instruktionen mit den Merkmalen des Anspruchs 7 und durch ein Modul mit den Merkmalen des Anspruchs 8 gelöst. Bevorzugte Ausgestaltungen der Erfindung sind Gegenstand der abhängigen Ansprüche.

Gemäß einem ersten Aspekt der Erfindung umfasst ein Verfahren zum Überwachen einer Komponente eines Steuerungssystems für ein Fortbewegungsmittel die Schritte:
- Senden eines Funktionsaufrufs an die Komponente, eine von der Komponente verwendete Funktion mit definierten Eingangsdaten auszuführen, wobei der Funktionsaufruf einen Identifikator für die auszuführende Funktion und einen Identifikator für die zu verarbeitenden Eingangsdaten umfasst und die Komponente die auszuführende Funktion und die zu verarbeitenden Eingangsdaten anhand der Identifikatoren aus einem Speicher aufruft;
- Empfangen einer Antwort der Komponente auf den Funktionsaufruf;
- Vergleichen der Antwort mit einer erwarteten Antwort; und
- Ausführen einer Aktion in Reaktion auf ein Ergebnis des Vergleichens.

Gemäß einem weiteren Aspekt der Erfindung umfasst ein Computerprogramm Instruktionen, die bei Ausführung durch einen Computer den Computer zur Ausführung der folgenden Schritte zum Überwachen einer Komponente eines Steuerungssystems für ein Fortbewegungsmittel veranlassen:
- Senden eines Funktionsaufrufs an die Komponente, eine von der Komponente verwendete Funktion mit definierten Eingangsdaten auszuführen, wobei der Funktionsaufruf einen Identifikator für die auszuführende Funktion und einen Identifikator für die zu verarbeitenden Eingangsdaten umfasst und die Komponente die auszuführende Funktion und die zu verarbeitenden Eingangsdaten anhand der Identifikatoren aus einem Speicher aufruft;
- Empfangen einer Antwort der Komponente auf den Funktionsaufruf;
- Vergleichen der Antwort mit einer erwarteten Antwort; und
- Ausführen einer Aktion in Reaktion auf ein Ergebnis des Vergleichens.

Der Begriff Computer ist dabei breit zu verstehen. Insbesondere umfasst er auch Steuergeräte, Controller, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist ein Modul zum Überwachen einer Komponente eines Steuerungssystems für ein Fortbewegungsmittel auf:
- ein Kommunikationsmodul zum Senden eines Funktionsaufrufs an die Komponente, eine von der Komponente verwendete Funktion mit definierten Eingangsdaten auszuführen, wobei der Funktionsaufruf einen Identifikator für die auszuführende Funktion und einen Identifikator für die zu verarbeitenden Eingangsdaten umfasst und die Komponente die auszuführende Funktion und die zu verarbeitenden Eingangsdaten anhand der Identifikatoren aus einem Speicher aufruft, und zum Empfangen einer Antwort der Komponente auf den Funktionsaufruf;
- ein Vergleichsmodul zum Vergleichen der Antwort mit einer erwarteten Antwort; und
- ein Aktionsmodul zum Ausführen einer Aktion in Reaktion auf ein Ergebnis des Vergleichens.

Bei der erfindungsgemäßen Lösung ruft ein extern zur überwachten Komponente angeordnetes Modul eine definierte Funktion der Komponente mit definierten Eingangsdaten auf und vergleicht das Ergebnis mit einem erwarteten Ergebnis. Besteht eine Diskrepanz zwischen dem Ergebnis und dem erwarteten Ergebnis, kann das Modul geeignete Maßnahmen einleiten. Bei der aufgerufenen Funktion handelt es sich um eine Funktion, die auch im Normalbetrieb von der Komponente ausgeführt wird, z.B. eine Ende-zu-Ende Kommunikationsabsicherung (E2E Protection), ein kryptographischer Schutz, eine Objekterkennung, etc. Auf diese Weise wird ein Management der Systemgesundheit mit deutlich erhöhtem Sicherheitsniveau erzielt, das ASIL-D genügt. Die dafür erforderliche höhere Komplexität ist dabei vernachlässigbar. Erfindungsgemäß werden die Funktion und die zu verarbeitenden Eingangsdaten durch Identifikatoren repräsentiert.

Durch die Verwendung von Identifikatoren, z.B. Identifikationsnummern, kann das Datenvolumen zwischen dem Watchdog und dem Steuerungssystem bzw. der überwachten Komponente reduziert werden. Die zu verwendenden Funktionen und Eingangsdaten sind in einem gemeinsam verwendeten Speicher abgelegt.

Gemäß einem Aspekt der Erfindung wird in Reaktion auf eine Abweichung zwischen der Antwort und der erwarteten Antwort ein Zähler erhöht oder ein Reset der Komponente initiiert oder es wird bei einer Übereinstimmung zwischen der Antwort und der erwarteten Antwort ein Zähler reduziert. Bei der Implementierung eines Watchdogs werden regelmäßig Zähler genutzt, die dekrementiert werden und beim Erreichen von Null ein internes Ausfallsignal liefern. Dieser Ansatz lässt sich auf die erfindungsgemäße Lösung übertragen, indem bei einer fehlenden Übereinstimmung ein Zähler dekrementiert wird. Auf diese Weise wird nicht sofort bei einer ersten Abweichung ein Reset ausgelöst. Alternativ kann natürlich auch schon bei einer ersten Abweichung ein Neustart der Komponente erzwungen werden.

Gemäß einem Aspekt der Erfindung werden die Funktion und die definierten Eingangsdaten aus einer Liste mit Funktionen und Eingangsdaten abgerufen. Welche Funktionen und Eingangsdaten in der Liste abgelegt sind, kann z.B. im Rahmen der Softwareentwicklung bestimmt werden. Durch eine Aktualisierung der Liste kann auf einfache Weise eine Anpassung an eine aktualisierte Software der Komponente erfolgen. Zudem kann auf diese Weise auch eine Überwachung von neu hinzugefügten Komponenten gewährleistet werden.

Gemäß einem Aspekt der Erfindung erfolgen das Senden des Funktionsaufrufs an die Komponente, eine Auswahl der Funktion oder eine Auswahl der definierten Eingangsdaten zufallsbasiert. Durch das zufallsbasierte Senden sowie die zufallsbasierte Auswahl der Funktion und/oder der Eingangsdaten wird eine verbesserte Detektion von Fehlfunktionen erreicht.

Gemäß einem Aspekt der Erfindung wird beim Vergleichen der Antwort mit der erwarteten Antwort eine Antwortverzögerung ausgewertet. Die Abfrage erfolgt in einem Zeitfenster, das abhängig von der Funktion sein kann. Falls innerhalb des Zeitfensters keine Antwort eingeht, kann daraus auf eine Fehlfunktion geschlossen werden.

Gemäß einem Aspekt der Erfindung ist die Komponente eine Applikationssoftware, ein Container, ein Hypervisor oder ein Betriebssystem. Unter Verwendung der erfindungsgemäßen Lösung lassen sich sämtliche Komponenten eines Steuerungssystems für ein Fortbewegungsmittel überwachen, die Funktionen ausführen. Das Betriebssystem wird dabei vorzugsweise indirekt überprüft, z.B. auf Funktionen oder Threads, damit die Abfragen die Funktionalität nicht stören.

Ein erfindungsgemäßes Verfahren oder ein erfindungsgemäßes Modul wird in einem Fortbewegungsmittel eingesetzt, z.B. in einem Kraftfahrzeug. Bei dem Fortbewegungsmittel kann es sich aber auch um ein bemanntes oder unbemanntes Fluggerät handeln, z.B. eine Drohne oder ein Flugtaxi, etc. Das Modul kann beispielsweise in einem Sicherheitskern eines Hochleistungscontrollers oder extern zum Hochleistungscontroller implementiert sein.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Verfahren zum Überwachen einer Komponente eines Steuerungssystems für ein Fortbewegungsmittel;
- Fig. 2: zeigt schematisch eine erste Ausführungsform eines Moduls zum Überwachen einer Komponente eines Steuerungssystems für ein Fortbewegungsmittel;
- Fig. 3: zeigt schematisch eine zweite Ausführungsform eines Moduls zum Überwachen einer Komponente eines Steuerungssystems für ein Fortbewegungsmittel;
- Fig. 4: zeigt schematisch ein Fortbewegungsmittel, in dem eine erfindungsgemäße Lösung realisiert ist;
- Fig. 5: zeigt schematisch ein Systemdiagramm einer erfindungsgemäßen Lösung;
- Fig. 6: zeigt schematisch eine erste Ausführungsform einer erfindungsgemäßen Lösung für einen Hochleistungsrechner eines Kraftfahrzeugs; und
- Fig. 7: zeigt schematisch eine zweite Ausführungsform einer erfindungsgemäßen Lösung für einen Hochleistungsrechner eines Kraftfahrzeugs.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

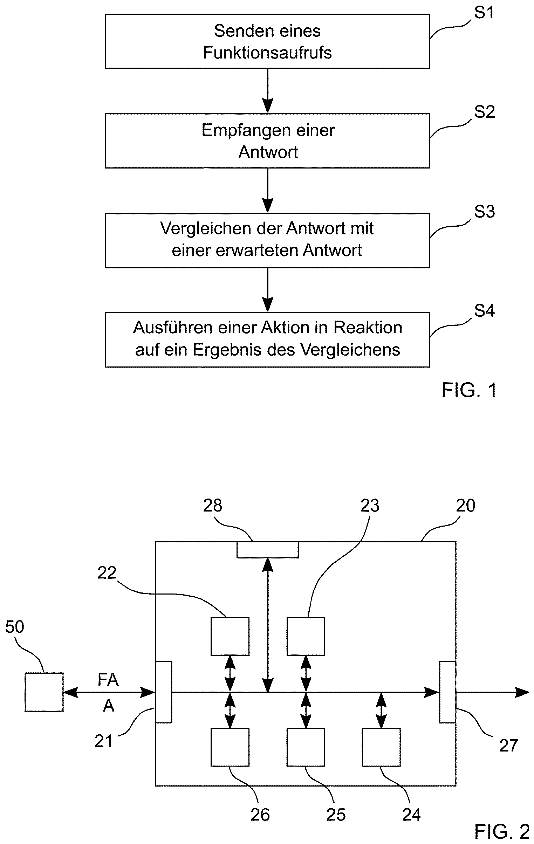

Fig. 1 zeigt schematisch ein Verfahren zum Überwachen einer Komponente eines Steuerungssystems für ein Fortbewegungsmittel. Bei der Komponente kann es sich beispielsweise um eine Applikationssoftware, einen Container, einen Hypervisor oder ein Betriebssystem handeln. In einem ersten Schritt wird ein Funktionsaufruf an die Komponente geendet S1, eine von der Komponente verwendete Funktion mit definierten Eingangsdaten auszuführen. Die Funktion und die definierten Eingangsdaten können z.B. aus einer Liste mit Funktionen und Eingangsdaten abgerufen werden und werden durch Identifikatoren repräsentiert. Das Senden S1 des Funktionsaufrufs an die Komponente, eine Auswahl der Funktion oder eine Auswahl der definierten Eingangsdaten erfolgen vorzugsweise zufallsbasiert. Anschließend wird eine Antwort der Komponente auf den Funktionsaufruf empfangen S2. Die Antwort wird daraufhin mit einer erwarteten Antwort verglichen S3. Dabei kann zudem eine Antwortverzögerung ausgewertet werden. In Reaktion auf ein Ergebnis des Vergleichens S3 wird schließlich eine Aktion ausgeführt S4. Beispielsweise kann in Reaktion auf eine Abweichung zwischen der Antwort und der erwarteten Antwort ein Zähler erhöht werden oder ein Reset der Komponente initiiert werden. Bei einer Übereinstimmung zwischen der Antwort und der erwarteten Antwort kann hingegen ein Zähler reduziert werden.

Fig. 2 zeigt eine vereinfachte schematische Darstellung einer ersten Ausführungsform eines Moduls 20 zum Überwachen einer Komponente eines Steuerungssystems 50 für ein Fortbewegungsmittel. Bei der Komponente kann es sich beispielsweise um eine Applikationssoftware, einen Container, einen Hypervisor oder ein Betriebssystem handeln. Das Modul 20 hat eine Schnittstelle 21, über die ein Kommunikationsmodul 22 einen Funktionsaufruf FA an die Komponente des Steuerungssystems 50 senden kann, eine von der Komponente verwendete Funktion mit definierten Eingangsdaten auszuführen. Die Funktion und die definierten Eingangsdaten können z.B. aus einer Liste mit Funktionen und Eingangsdaten abgerufen werden und werden durch Identifikatoren repräsentiert. Das Senden des Funktionsaufrufs FA an die Komponente, eine Auswahl der Funktion oder eine Auswahl der definierten Eingangsdaten erfolgen vorzugsweise zufallsbasiert. Über die Schnittstelle 21 kann das Modul 20 zudem eine Antwort A der Komponente auf den Funktionsaufruf FA empfangen. Ein Vergleichsmodul 23 vergleicht dann die Antwort A mit einer erwarteten Antwort. Dabei kann das Vergleichsmodul 23 zudem eine Antwortverzögerung auswerten. Ein Aktionsmodul 24 führt schließlich in Reaktion auf ein Ergebnis des Vergleichens eine Aktion aus. Beispielsweise kann in Reaktion auf eine Abweichung zwischen der Antwort A und der erwarteten Antwort ein Zähler erhöht werden oder ein Reset der Komponente initiiert werden. Bei einer Übereinstimmung zwischen der Antwort A und der erwarteten Antwort kann hingegen ein Zähler reduziert werden. Steuerbefehle, die aus der vom Aktionsmodul 24 ausgeführten Aktion resultieren, können über einen Ausgang 27 des Moduls 20 ausgegeben werden, z.B. an das Steuerungssystem 50.

Das Kommunikationsmodul 22, das Vergleichsmodul 23 und das Aktionsmodul 24 können von einem Kontrollmodul 25 gesteuert werden. Über eine Benutzerschnittstelle 28 können gegebenenfalls Einstellungen des Kommunikationsmoduls 22, des Vergleichsmoduls 23, des Aktionsmoduls 24 oder des Kontrollmoduls 25 geändert werden. Die in der Vorrichtung 20 anfallenden Daten können bei Bedarf in einem Speicher 26 der Vorrichtung 20 abgelegt werden, beispielsweise für eine spätere Auswertung oder für eine Nutzung durch die Komponenten der Vorrichtung 20. Das Kommunikationsmodul 22, das Vergleichsmodul 23, das Aktionsmodul 24 sowie das Kontrollmodul 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Die Schnittstelle 21 und der Ausgang 27 können als getrennte Schnittstellen oder als eine kombinierte Schnittstelle implementiert sein.

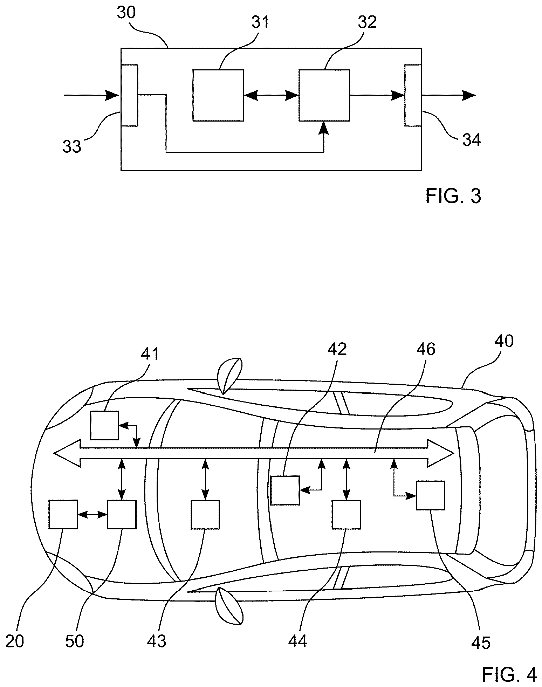

Fig. 3 zeigt eine vereinfachte schematische Darstellung einer zweiten Ausführungsform eines Moduls 30 zum Überwachen einer Komponente eines Steuerungssystems für ein Fortbewegungsmittel. Das Modul 30 weist einen Prozessor 32 und einen Speicher 31 auf. Beispielsweise handelt es sich bei dem Modul 30 um einen Controller. Im Speicher 31 sind Instruktionen abgelegt, die das Modul 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Das Modul 30 hat einen Eingang 33 zum Empfangen von Informationen von einer Komponente eines Steuerungssystems. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 zeigt schematisch ein Fortbewegungsmittel 40, in dem eine erfindungsgemäße Lösung realisiert ist. Bei dem Fortbewegungsmittel 40 handelt es sich in diesem Beispiel um ein Kraftfahrzeug. Das Kraftfahrzeug weist zumindest ein Assistenzsystem 41 auf, das einen Bediener des Kraftfahrzeugs im Fahrbetrieb unterstützt. Mit einer Sensorik 42 können Daten zur Fahrzeugumgebung oder zur Fahrzeugbewegung erfasst werden. Die Sensorik 42 kann insbesondere Sensoren zur Umfelderkennung umfassen, z.B. Ultraschallsensoren, Laserscanner, Radarsensoren, Lidarsensoren oder Kameras, sowie Sensoren zur Ermittlung von relativen Bewegungen, z.B. Sensoren für die Odometrie, Gyroskope oder Beschleunigungssensoren. Zur Steuerung von Komponenten bzw. Funktionen des Kraftfahrzeugs dient ein Steuerungssystem 50. Ein Modul 20 überwacht zumindest eine Komponente des Steuerungssystems 50, um Ausfälle der Komponente zu detektieren und bei Bedarf geeignete Maßnahmen einzuleiten. Das Modul 20 kann natürlich auch in das Steuerungssystem 50 integriert sein. Weitere Bestandteile des Kraftfahrzeugs sind in diesem Beispiel ein Navigationssystem 43, sowie eine Datenübertragungseinheit 44. Mittels der Datenübertragungseinheit 44 kann eine Verbindung zu einem Backend aufgebaut werden, z.B. um aktualisierte Software für die Komponenten des Kraftfahrzeugs zu beziehen. Zur Speicherung von Daten ist ein Speicher 45 vorhanden. Der Datenaustausch zwischen den verschiedenen Komponenten des Kraftfahrzeugs erfolgt über ein Netzwerk 46.

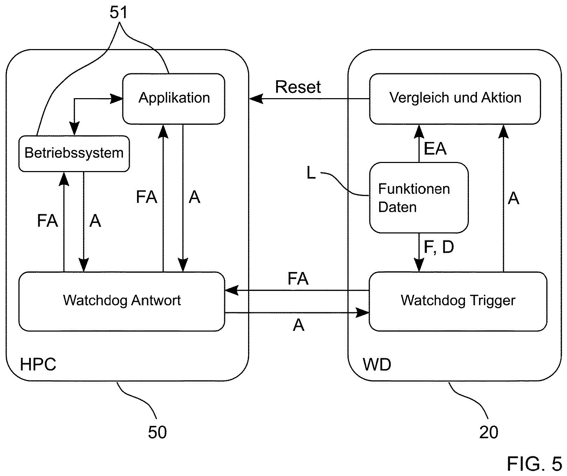

Fig. 5 zeigt schematisch ein Systemdiagramm einer erfindungsgemäßen Lösung. Das System umfasst zwei Komponenten, eine Aufforderungs-Komponente (Challenge Component) und eine Antwort-Komponente (Response Component). Die Aufforderungs-Komponente ist im Überwachungsmodul 20 bzw. Watchdog WD realisiert. Die Antwort-Komponente ist hingegen im Steuerungssystem 50 bzw. Hochleistungscontroller HPC realisiert.

Die Aufforderungs-Komponente triggert zu vorzugsweise zufallsbasierten Zeiten eine Aufforderung für die Antwort-Komponente und sendet dazu einen Funktionsaufruf FA an diese. Der Funktionsaufruf FA umfasst Identifikatoren für eine auszuführende Funktion F und die zu verarbeitenden Eingangsdaten D. Die auszuführende Funktion F und die zugehörigen Eingangsdaten D können z.B. aus einer Liste L mit Funktionen und Daten entnommen werden, die zudem die jeweilige erwartete Antwort enthält.

Die Antwort-Komponente nimmt den Funktionsaufruf FA entgegen und lässt die gewünschte Funktion F mit den zugehörigen Eingangsdaten D von der zu überwachenden Komponente 51 ausführen, indem z.B. die entsprechende Funktion F eines Betriebssystems oder einer Applikation aufgerufen wird. Die Funktion bzw. die entsprechende Datei kann in einem Applikations-Container abgelegt sein. Die aus der Verarbeitung der Eingangsdaten D resultierende Antwort A wird anschließend von der Antwort-Komponente an die Aufforderungs-Komponente übermittelt.

Die Aufforderungs-Komponente nimmt die Antwort A entgegen und wertet sie aus, indem die Antwort A mit der erwarteten Antwort EA verglichen wird. Dabei kann zudem die Antwortzeit ausgewertet werden. Wenn die Auswertung nicht den Erwartungen entspricht, wird ein Signal für einen Neustart der Komponente 51 an das Steuerungssystem 50 gesendet.

Der Datenaustausch kann beispielsweise wie folgt ablaufen. Die Aufforderungs-Komponente triggert zunächst die Antwort-Komponente. Die zu verwendenden Eingangsdaten werden in einer Variablen VAR0 in einem gemeinsam verwendeten Speicher abgelegt. Die erwartete Antwort wird in einer ersten Ausgangsvariablen VAR1 abgelegt. Die gewünschte Funktion wird dann mit VAR0 als Eingangsdatum aufgerufen. Das Ergebnis der Funktion wird in einer zweiten Ausgangsvariablen VAR2 abgelegt. Die Ergebnisse in den beiden Ausgangsvariablen VAR1 und VAR2 werden von der Aufforderungs-Komponente ausgewertet.

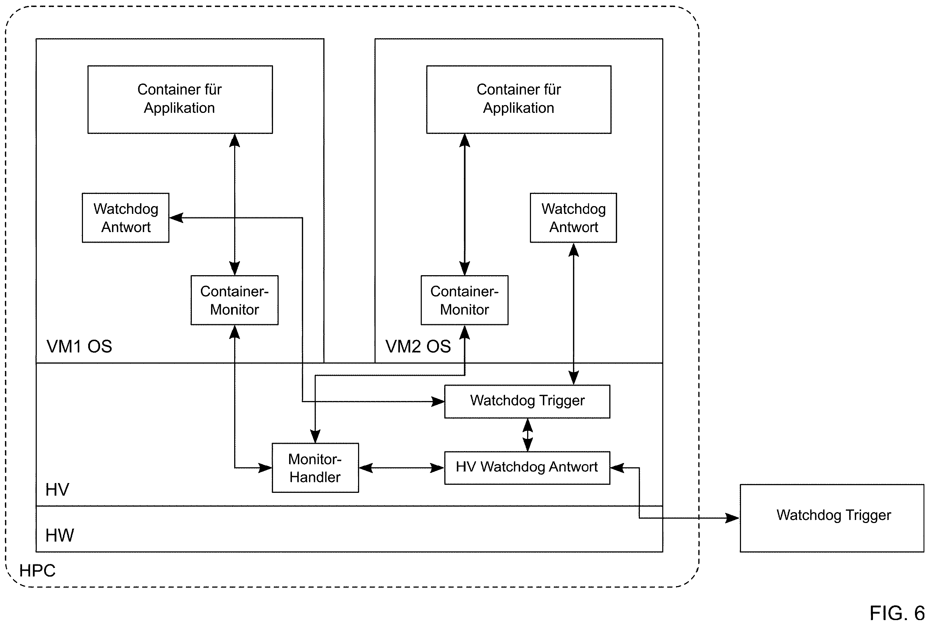

Fig. 6 zeigt schematisch eine erste Ausführungsform einer erfindungsgemäßen Lösung für einen Hochleistungscontroller HPC eines Kraftfahrzeugs. Die zentrale Steuereinheit eines Kraftfahrzeugs, die im gezeigten Beispiel mit einer auf der AUTOSAR-Architektur [1] basierenden Software von Elektrobit [2] arbeitet, enthält einen Hochleistungscontroller, der aus einer Kombination mehrerer Mehrkernprozessoren besteht. Diese Prozessoren sind in Leistungskerne und Sicherheitskerne unterteilt, die in Fig. 6 nicht explizit dargestellt sind. Auf den Leistungskernen laufen mehrere Leistungspartitionen, in denen CPU-intensive Fahrzeug- und Benutzerfunktionen ausgeführt werden. Auf den Sicherheitskernen läuft eine Sicherheitspartition, in der Sicherheitsfunktionen ausgeführt werden. Auf den Leistungspartitionen kann ein Hypervisor HV laufen, d.h. eine Virtualisierungsumgebung. Der Hypervisor stellt virtuelle Maschinen VM1, VM2 mit jeweiligen Betriebssystemen OS bereit, in denen Applikationen in Containern laufen. Die Container isolieren die Anwendungen vom Betriebssystem und anderen Anwendungen. Die Container werden jeweils von einem Container-Monitor überwacht, mit dem die Auslastung des Containers überprüft, Engpässe erkannt und Fehler untersucht werden können. Die Container-Monitore werden ihrerseits von einem Monitor-Handler im Hypervisor HV überwacht. Dabei handelt es sich um einen Prozess, der Interaktionen überwacht und Daten für die Berichterstattung sammelt. Ein Monitor-Handler manipuliert oder modifiziert dabei Objekte im System nicht aktiv.

Die Hauptkomponenten des Hochleistungscontrollers HPC sind ein RISC-Prozessor, Hardware HW für die Leistungspartitionen und die Sicherheitspartition sowie eine in Fig. 6 nicht dargestellte Grafikverarbeitungseinheit. Auf der Sicherheitspartition wird typischerweise klassisches AUTOSAR verwendet, das nach ASIL B entwickelt ist. Die Leistungspartitionen verwenden typischerweise Adaptive AUTOSAR, das nach ASIL A oder niedriger entwickelt ist. Eines der Hauptmerkmale von Adaptive AUTOSAR ist die Fähigkeit, einzelne Funktionen rückwirkend und zur Laufzeit zu aktualisieren. Im Gegensatz zu klassischem AUTOSAR kann dies ohne Austausch und Neustart der gesamten Software der Steuereinheit erfolgen. Wenn auf einem adaptiven Betriebssystem Sicherheitsapplikationen nach ASIL B laufen, muss die Sicherheitspartition den Gesundheitszustand der Leistungspartition gemäß ASIL B überwachen. Zudem muss eine externe Komponente, die ASIL D genügt, den Gesundheitszustand des klassischen Betriebssystems der Sicherheitspartition überwachen. Diese Anforderungen können nur erreicht werden, wenn die Abdeckung der Gesundheitsüberwachung mindestens 90% beträgt.

Da die meisten Funktionen des Betriebssystems OS nur einen Teil der Rechenressourcen nutzen, z.B. RISC-Funktionen, RAM oder Stack, werden vom Watchdog mehr Funktionen des Betriebssystems OS genutzt, z.B. die Objekterkennung mittels künstlicher Intelligenz. Vorrangig werden Funktionen des Betriebssystems OS überwacht, die von Applikationen verwendet werden, nicht jedoch ungenutzte Funktionen und Ressourcen des Betriebssystems OS. Die Funktionsaufrufe, einschließlich Eingangsdaten und ggf. auch Ausgabedaten, werden mit Identifikationsnummern in einem nichtflüchtigen Speicher gespeichert werden. Der Watchdog verwendet dann nur die Identifikationsnummern, um den für die Überwachung erforderlichen Datenaustausch zu reduzieren.

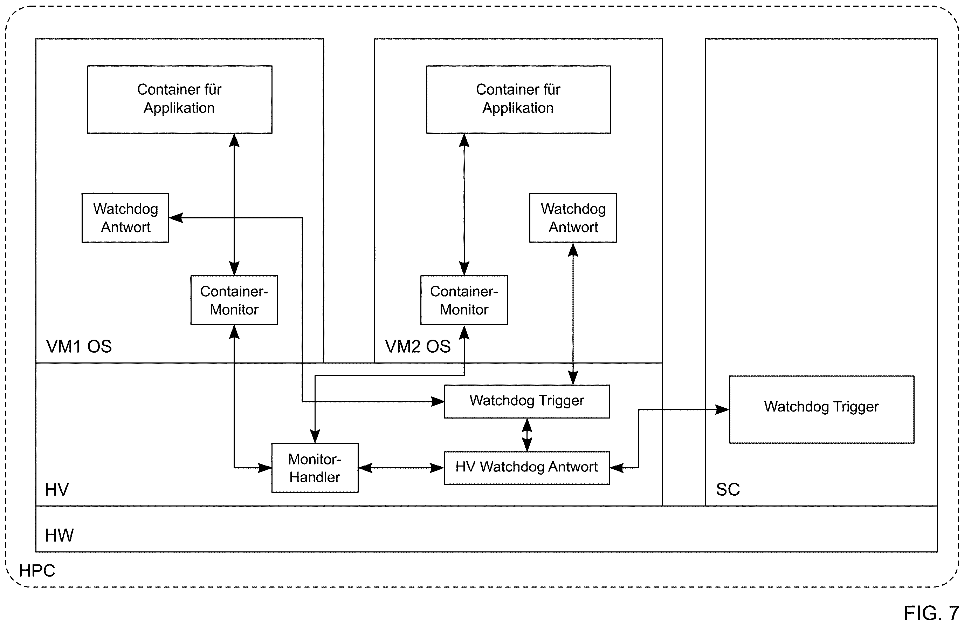

Fig. 7 zeigt schematisch eine zweite Ausführungsform einer erfindungsgemäßen Lösung für einen Hochleistungscontroller HPC eines Kraftfahrzeugs. Die Ausführungsform entspricht weitgehend der bereits in Fig. 6 gezeigten Ausführungsform. Allerdings ist der Watchdog in diesem Fall in einem Sicherheitskern SC implementiert, der auf der Hardware HW des Hochleistungsrechners HPC läuft.

### Referenzen

[1] https://www.autosar.org/
[2] https://www.elektrobit.com/products/ecu/technologies/autosar/

## Patentansprüche

1. Verfahren zum Überwachen einer Komponente (51) eines Steuerungssystems (50) für ein Fortbewegungsmittel (40), mit den Schritten:
- Senden (S1) eines Funktionsaufrufs (FA) an die Komponente (51), eine von der Komponente (51) verwendete Funktion (F) mit definierten Eingangsdaten (D) auszuführen;
- Empfangen (S2) einer Antwort (A) der Komponente (51) auf den Funktionsaufruf (FA);
- Vergleichen (S3) der Antwort (A) mit einer erwarteten Antwort (EA); und
- Ausführen (S4) einer Aktion in Reaktion auf ein Ergebnis des Vergleichens (S3); **dadurch gekennzeichnet, dass** der Funktionsaufruf (FA) einen Identifikator für die auszuführende Funktion (F) und einen Identifikator für die zu verarbeitenden Eingangsdaten (D) umfasst und die Komponente (51) die auszuführende Funktion (F) und die zu verarbeitenden Eingangsdaten (D) anhand der Identifikatoren aus einem Speicher aufruft.

2. Verfahren gemäß Anspruch 1, wobei in Reaktion auf eine Abweichung zwischen der Antwort (A) und der erwarteten Antwort (EA) ein Zähler erhöht wird oder ein Reset der Komponente (51) initiiert wird oder bei einer Übereinstimmung zwischen der Antwort (A) und der erwarteten Antwort (EA) ein Zähler reduziert wird.

3. Verfahren gemäß Anspruch 1 oder 2, wobei die Funktion (F) und die definierten Eingangsdaten (D) aus einer Liste (L) mit Funktionen (F) und Eingangsdaten (D) abgerufen werden.

4. Verfahren gemäß einem der vorherigen Ansprüche, wobei das Senden (S1) des Funktionsaufrufs (FA) an die Komponente (51), eine Auswahl der Funktion (F) oder eine Auswahl der definierten Eingangsdaten (D) zufallsbasiert erfolgen.

5. Verfahren gemäß einem der vorherigen Ansprüche, wobei beim Vergleichen (S3) der Antwort (A) mit der erwarteten Antwort (EA) eine Antwortverzögerung ausgewertet wird.

6. Verfahren gemäß einem der vorherigen Ansprüche, wobei die Komponente (51) eine Applikationssoftware, ein Container, ein Hypervisor (HV) oder ein Betriebssystem (OS) ist.

7. Computerprogramm mit Instruktionen, die bei Ausführung durch einen Computer den Computer zur Ausführung der Schritte eines Verfahrens gemäß einem der Ansprüche 1 bis 6 zum Überwachen einer Komponente (51) eines Steuerungssystems (50) für ein Fortbewegungsmittel (40) veranlassen.

8. Modul (20) zum Überwachen einer Komponente (51) eines Steuerungssystems (50) für ein Fortbewegungsmittel (40), mit:
- einem Kommunikationsmodul (22) zum Senden (S1) eines Funktionsaufrufs (FA) an die Komponente (51), eine von der Komponente (51) verwendete Funktion (F) mit definierten Eingangsdaten (D) auszuführen, und zum Empfangen (S2) einer Antwort (A) der Komponente (51) auf den Funktionsaufruf (FA);
- einem Vergleichsmodul (23) zum Vergleichen (S3) der Antwort (A) mit einer erwarteten Antwort (EA); und
- einem Aktionsmodul (24) zum Ausführen (S4) einer Aktion in Reaktion auf ein Ergebnis des Vergleichens;
**dadurch gekennzeichnet, dass** der Funktionsaufruf (FA) einen Identifikator für die auszuführende Funktion (F) und einen Identifikator für die zu verarbeitenden Eingangsdaten (D) umfasst und die Komponente (51) eingerichtet ist, die auszuführende Funktion (F) und die zu verarbeitenden Eingangsdaten (D) anhand der Identifikatoren aus einem Speicher aufzurufen.

9. Modul (20) gemäß Anspruch 8, wobei das Modul (20) in einem Sicherheitskern (SC) eines Hochleistungscontrollers (HPC) oder extern zum Hochleistungscontroller (HPC) implementiert ist.

## Claims

1. Method for monitoring a component (51) of a control system (50) for a means of transport (40), having the steps of:
- sending (S1) a function call (FA) to the component (51) to perform a function (F) that is used by the component (51), using defined input data (D);
- receiving (S2) a response (A) to the function call (FA) from the component (51);
- comparing (S3) the response (A) with an expected response (EA); and
- performing (S4) an action in response to a result of the comparison (S3);
**characterized in that** the function call (FA) comprises an identifier for the function (F) that is to be performed and an identifier for the input data (D) that are to be processed, and the component (51) calls from a memory on the basis of the identifiers the function (F) that is to be performed and the input data (D) that are to be processed.

2. Method according to Claim 1, wherein a counter is increased or a reset of the component (51) is initiated in response to a difference between the response (A) and the expected response (EA) or a counter is reduced if the response (A) and the expected response (EA) match.

3. Method according to Claim 1 or 2, wherein the function (F) and the defined input data (D) are retrieved from a list (L) containing functions (F) and input data (D).

4. Method according to one of the preceding claims, wherein the sending (S1) of the function call (FA) to the component (51), a selection of the function (F) or a selection of the defined input data (D) are carried out on a random basis.

5. Method according to one of the preceding claims, wherein a response delay is evaluated when comparing (S3) the response (A) with the expected response (EA).

6. Method according to one of the preceding claims, wherein the component (51) is application software, a container, a hypervisor (HV) or an operating system (OS).

7. Computer program having instructions which, when executed by a computer, cause the computer to perform the steps of a method according to one of Claims 1 to 6 for monitoring a component (51) of a control system (50) for a means of transport (40).

8. Module (20) for monitoring a component (51) of a control system (50) for a means of transport (40), having:
- a communication module (22) for sending (S1) a function call (FA) to the component (51) to perform a function (F) that is used by the component (51), using defined input data (D), and for receiving (S2) a response (A) to the function call (FA) from the component (51);
- a comparison module (23) for comparing (S3) the response (A) with an expected response (EA); and
- an action module (24) for performing (S4) an action in response to a result of the comparison;
**characterized in that** the function call (FA) comprises an identifier for the function (F) that is to be performed and an identifier for the input data (D) that are to be processed, and the component (51) is configured to call from a memory on the basis of the identifiers the function (F) that is to be performed and the input data (D) that are to be processed.

9. Module (20) according to Claim 8, wherein the module (20) is implemented in a safety core (SC) of a high-performance controller (HPC) or externally to the high-performance controller (HPC).

## Revendications

1. Procédé permettant de surveiller un composant (51) d'un système de commande (50) pour un moyen de déplacement (40), comprenant les étapes consistant à :
- envoyer (S1) un appel de fonction (FA) au composant (51) d'exécuter une fonction (F) utilisée par le composant (51) avec des données d'entrée définies (D);
- recevoir (S2) une réponse (A) du composant (51) à l'appel de fonction (FA) ;
- comparer (S3) la réponse (A) avec une réponse attendue (EA) ; et
- exécuter (S4) une action en réaction à un résultat de la comparaison (S3) ;
**caractérisé en ce que** l'appel de fonction (FA) comprend un identificateur pour la fonction (F) à exécuter et un identificateur pour les données d'entrée (D) à traiter, et le composant (51) appelle la fonction (F) à exécuter et les données d'entrée (D) à traiter à partir d'une mémoire à l'aide des identificateurs.

2. Procédé selon la revendication 1, dans lequel en réaction à une différence entre la réponse (A) et la réponse attendue (EA), un compteur est incrémenté ou une réinitialisation du composant (51) est lancée, ou en cas de concordance entre la réponse (A) et la réponse attendue (EA), un compteur est décrémenté.

3. Procédé selon la revendication 1 ou 2, dans lequel la fonction (F) et les données d'entrée (D) définies sont appelées à partir d'une liste (L) de fonctions (F) et de données d'entrée (D).

4. Procédé selon l'une quelconque des revendications précédentes, dans lequel l'envoi (S1) de l'appel de fonction (FA) au composant (51), une sélection de la fonction (F) ou une sélection des données d'entrée (D) définies a lieu de manière aléatoire.

5. Procédé selon l'une quelconque des revendications précédentes, dans lequel un retard de réponse est évalué lors de la comparaison (S3) de la réponse (A) avec la réponse attendue (EA).

6. Procédé selon l'une quelconque des revendications précédentes, dans lequel le composant (51) est un logiciel d'application, un conteneur, un hyperviseur (HV) ou un système d'exploitation (OS).

7. Programme informatique comprenant des instructions qui lors de l'exécution par un ordinateur amènent l'ordinateur à exécuter les étapes d'un procédé selon l'une quelconque des revendications 1 à 6 pour surveiller un composant (51) d'un système de commande (50) pour un moyen de déplacement (40).

8. Module (20) permettant de surveiller un composant (51) d'un système de commande (50) pour un moyen de déplacement (40), comprenant :
- un module de communication (22) servant à envoyer (S1) un appel de fonction (FA) au composant (51) d'exécuter une fonction (F) utilisée par le composant (51) avec des données d'entrée (D) définies, et à recevoir (S2) une réponse (A) du composant (51) à l'appel de fonction (FA) ;
- un module de comparaison (23) servant à comparer (S3) la réponse (A) avec une réponse attendue (EA) ; et
- un module d'action (24) servant à exécuter (S4) une action en réaction à un résultat de la comparaison ;
**caractérisé en ce que** l'appel de fonction (FA) comprend un identificateur pour la fonction (F) à exécuter et un identificateur pour les données d'entrée (D) à traiter, et le composant (51) est aménagé pour appeler la fonction à exécuter (F) et les données d'entrée (D) à traiter à partir d'une mémoire à l'aide des identificateurs.

9. Module (20) selon la revendication 8, dans lequel le module (20) est mis en oeuvre dans un noyau de sécurité (SC) d'un contrôleur haute performance (HPC) ou de manière externe par rapport au contrôleur haute performance (HPC).
